# EUROPÄISCHE PATENTSCHRIFT

(11) **EP 1 676 507 B1**
(45) Veröffentlichungstag und Bekanntmachung des Hinweises auf die Patenterteilung: **20.07.2016**
(21) Anmeldenummer: 05109926.5
(22) Anmeldetag: 25.10.2005
(51) Int. Cl.: A47J 27/21, A47J 27/62, H01R 13/703

(54) **Stromversorgungsvorrichtung mit einem Anschlussteil**
Electricity supply device having a connecting part
Dispositif d'alimentation électrique comportant une partie de connexion

(30) Priorität: 29.12.2004 DE 102004063283
(43) Veröffentlichungstag der Anmeldung: 05.07.2006
(73) Patentinhaber: BSH Hausgeräte GmbH, 81739 München (DE)
(72) Erfinder: Neumayer, Dan, 83233, Bernau (DE); Zschau, Günter, 83301, Traunreut (DE)

(56) Entgegenhaltungen:
- EP-A2- 1 253 679
- US-B1- 6 310 306

## Beschreibung

Die Erfindung geht aus von einer Stromversorgungsvorrichtung mit einem Anschlussteil zum Aufstecken eines Küchengeräts nach dem Oberbegriff des Anspruchs 1.

Aus der DE 37 39 318 A1 ist eine Stromversorgungsvorrichtung mit einem Anschlussteil zum Aufstecken eines Küchengeräts bekannt. Die Stromversorgungsvorrichtung umfasst mehrere Kontaktelemente zum Kontaktieren des Küchengeräts bzw. korrespondierender Kontaktelemente desselben. Ferner weist die Stromversorgungsvorrichtung eine Schaltvorrichtung zum Verbinden der Kontaktelemente mit einem Stromnetz auf, so dass durch die Schaltvorrichtung eine leitende Verbindung zwischen den Kontaktelementen und dem Stromnetz selbsttätig unterbrochen wird, wenn ein Bediener das Küchengerät von dem Anschlussteil abnimmt. Dadurch kann vermieden werden, dass bei abgenommenem Küchengerät eine Spannung auf den Kontaktelementen liegt.

Ferner offenbart die EP 1 253 679 A2 einen elektrische Steckverbinder entsprechend dem Oberbegriff des Anspruchs 1.

Darüber hinaus offenbart die US 6,310,306 eine Sicherheitssteckdosenanordnung.

Die Aufgabe der Erfindung besteht insbesondere darin, eine Betriebssicherheit einer gattungsgemäßen Stromversorgungsvorrichtung bei abgenommenem Küchengerät zu erhöhen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Stromversorgungsvorrichtung mit einem Anschlussteil zum Aufstecken eines Küchengeräts mit einem Kontaktelement zum Kontaktieren des Küchengeräts und mit einer Schaltvorrichtung zum Verbinden des Kontaktelements mit einem Stromnetz.

Es wird vorgeschlagen, dass die Schaltvorrichtung zumindest zwei unabhängig voneinander betätigbare Schaltelemente umfasst. Dadurch kann ein versehentliches Auslösen der Schaltvorrichtung und damit ein unbeabsichtigter und gefahrenträchtiger Kontakt des Kontaktelements mit dem Stromnetz vermieden werden, und die Betriebssicherheit der Stromversorgungsvorrichtung kann verbessert werden. Zudem kann vermieden werden, dass es bereits durch eine Fehlfunktion eines einzigen Schaltelements, beispielsweise durch ein Verkleben, zu einer Gefährdung des Bedieners kommen kann. Es ist eine Stromversorgungsvorrichtung erreichbar, die feststehend in eine Einbauküche integrierbar ist und die auch dann eine hinreichende Betriebssicherheit bietet, wenn sie vorwiegend freiliegend, d. h. ohne aufgestecktes Küchengerät, ist.

Die Schaltvorrichtung kann sowohl zur unmittelbaren als auch zur mittelbaren Verbindung des Kontaktelements mit einem Stromnetz vorgesehen sein. Die Verbindung kann über ein Stromversorgungskabel mit einem Steckelement erfolgen. Dann kann das Anschlussteil als mobile Basisstation für ein kabelloses Küchengerät einsetzbar sein, beispielsweise als Sockeleinheit für einen kabellosen Wasserkocher. Ferner kann das Anschlussteil zur Integration in eine Einbauküche vorgesehen sein. Dann kann die Schaltvorrichtung zur unmittelbaren Verbindung mit einem Haushaltsstromnetz, d. h. mit einem fest installierten Leitungssystem, oder zur mittelbaren Verbindung mit dem Haushaltsstromnetz über eine Steuereinheit ausgelegt sein. Unter "vorgesehen" soll in diesem Zusammenhang auch "ausgelegt" und "ausgestattet" verstanden werden.

Die erfindungsgemäße Stromversorgungsvorrichtung ist vorteilhaft für eine Vielzahl von verschiedenen Küchengeräten nutzbar und bildet eine universelle Schnittstelle zum Stromnetz. Beispielsweise können Wasserkocher, Kochtöpfe mit Ohm'schen Heizwendeln, elektrische Bratpfannen, Woks, Toaster, Kaffeeautomaten, Mixer oder andere, dem Fachmann als sinnvoll erscheinende Küchengeräte auf das Anschlussteil aufgesteckt werden. Besonders vorteilhaft kann die Stromversorgungsvorrichtung zur universellen Nutzung im Zusammenhang mit einer Vielzahl von Küchengeräten mit entsprechendem Steckelement geeignet sein.

Ein Eindringen einer herabtropfenden Flüssigkeit in ein Gehäuse eines der Schaltelemente kann vermieden werden, wenn wenigstens eines der Schaltelemente ein Gehäuse mit einem in Einbaulage horizontal verschiebbaren Schaltknopf umfasst.

In einer Weiterbildung der Erfindung wird vorgeschlagen, dass die Stromversorgungsvorrichtung wenigstens eine federbelastete Abdeckvorrichtung umfasst, die dazu vorgesehen ist, von einem korrespondierenden Steckelement des Küchengeräts aus einer Abdeckstellung in eine offene Stellung ausgelenkt zu sein und in der offenen Stellung das Schaltelement zu schließen. Dadurch kann ein Eindringen von Küchenflüssigkeiten und Schmutz in die Stromversorgungsvorrichtung insbesondere dann vermieden werden, wenn das Anschlusselement nicht von einem aufgesteckten Küchengerät bedeckt ist. Die Betriebssicherheit kann weiter erhöht werden, da Kurzschlüsse durch eingedrungene Verunreinigungen vermieden werden können.

Eine weitere Verbesserung der Betriebssicherheit kann erreicht werden, wenn die Abdeckvorrichtung zumindest zwei unabhängig voneinander auslenkbare, federbelastete Abdeckelemente umfasst, die zum Schalten jeweils eines Schaltelements vorgesehen sind. Trotz eines Verklebens und/oder eines Verklemmens eines der Abdeckelemente kann dadurch erreicht werden, dass ein weiterer Teil der Abdeckvorrichtung funktionstüchtig bleibt. Dabei kann eine vollständige Integration der Abdeckfunktion und der Schaltfunktion der Abdeckvorrichtung erreicht werden, wenn jeweils ein Abdeckelement zum Schalten eines der Schaltelemente vorgesehen ist.

Ist wenigstens ein erstes Abdeckelement zum Beschalten eines Kontaktelements vorgesehen, das von einem zweiten Abdeckelement bedeckt ist, kann vermieden werden, dass durch das Bewegen des ersten Abdeckelements allein ein unter Spannung stehendes Kontaktelement freigelegt werden kann bzw. ein freigelegtes Kontaktelement unter Spannung gesetzt werden kann. Als "Beschalten" soll in diesem Zusammenhang das Verbinden des Kontaktelements mit den Stromnetz verstanden werden.

Eine weiter erhöhte Betriebssicherheit ist erreichbar, wenn beide Abdeckelemente zum Beschalten des von dem jeweils anderen Abdeckelement bedeckten Kontaktelements vorgesehen sind.

Sind die Schaltelemente zu einer logischen UND-Schaltung verknüpft oder sind die Schaltelemente zwischen einer Phase des Stromnetzes und einem Kontaktelement in Reihe geschaltet, kann eine doppelte Absicherung erreicht werden, und eine Gefährdung durch eine versehentliche Betätigung eines der Schaltelemente kann vermieden werden. Die UND-Verknüpfung kann beispielsweise durch eine Reihenschaltung der Schaltelemente im Stromkreis erreicht werden, wobei ein Verbraucher des Küchengeräts von den Schaltelementen eingeschlossen werden kann. In einer anderen Ausgestaltung der Erfindung können beide Schaltelemente vor einem Kontaktelement des Anschlussteils in Reihe geschaltet sein. Dadurch kann insbesondere dann ein Sicherheitsgewinn erreicht werden, wenn das Kontaktelement zum Herstellen eines Kontakts mit einer Phase des Stromnetzes vorgesehen ist.

Eine Funkenbildung beim Herstellen des Kontakts zwischen dem Kontaktelement und dem Küchengerät kann vermieden werden, wenn das Schaltelement nur bei geschlossenem Kontakt des Kontaktelements mit einem korrespondierenden Kontaktelement des Steckelements betätigbar ist.

Ein Feuchtwerden des Schaltmittels kann zudem verhindert werden, wenn die Stromversorgungsvorrichtung zumindest ein Drainagemittel zum Trockenlegen der Schaltvorrichtung aufweist.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine in eine Küchenplatte integrierbare Stromversorgungsvorrichtung zum Aufstecken eines Küchengeräts,
- Fig. 2: die Stromversorgungsvorrichtung und einen Ausschnitt eines Küchengeräts in einem Vertikalschnitt,
- Fig. 3: die Stromversorgungsvorrichtung aus Figur 2 mit einem aufgesteckten Küchengerät,
- Fig. 4: ein Abdeckelement der Stromversorgungsvorrichtung aus den Figuren 1-3,
- Fig. 5: ein Schaltbild der Stromversorgungsvorrichtung aus den Figuren 1 - 4,
- Fig. 6: eine Küchenplatte mit einer integrierten Stromversorgungsvorrichtung,
- Fig. 7: eine in ein modulares Kochfeld integrierte Küchenplatte mit zwei integrierten Stromversorgungsvorrichtungen und
- Fig. 8: ein Einbaugerät mit einer Küchenplatte mit zwei integrierten Stromversorgungsvorrichtungen.

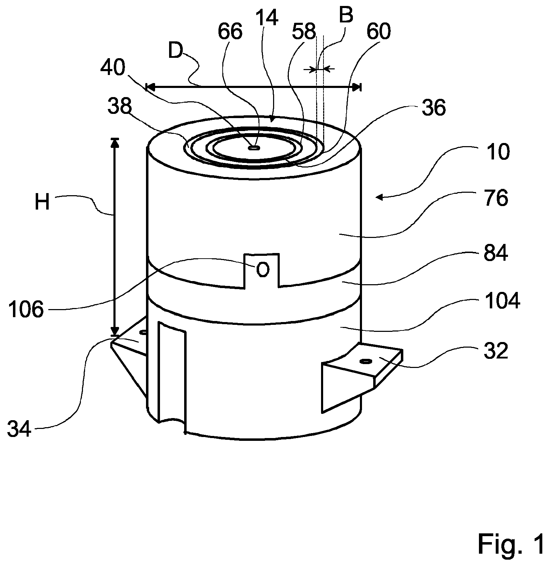

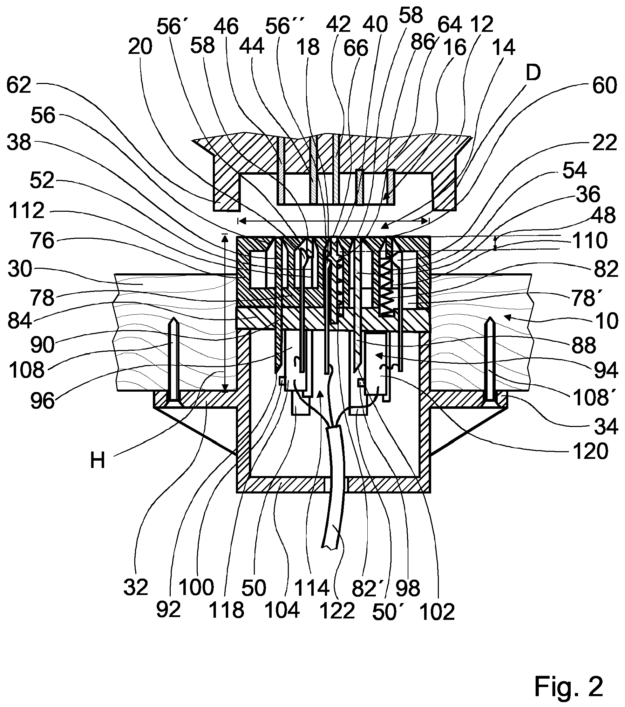

Die Figuren 1 und 2 zeigen eine Stromversorgungsvorrichtung, die in eine Küchenplatte 30 integriert ist. Ein aus der Küchenplatte 30 herausragender Teil der Stromversorgungsvorrichtung bildet ein Anschlussteil 10 zum Aufstecken eines Küchengeräts 12 und zum Verbinden des Küchengeräts 12 mit einem Haushaltsstromnetz. Das Anschlussteil 10 hat eine zylinderförmige Außenfläche mit einer vertikal ausgerichteten Zylinderachse, ragt um eine Höhe von 15 mm über die Küchenplatte 30 hinaus und weist einen Durchmesser D von 60 mm auf.

Auf einer kreisförmigen Oberfläche weist das Anschlussteil 10 zwei konzentrische Öffnungen 58, 60 von der Form eines ringförmigen Schlitzes auf. Ferner weist das Anschlussteil 10 eine mittige, kreisförmige Öffnung 66 auf, die zu den ringförmigen Öffnungen 58, 60 konzentrisch ist. Die Zentren der Ringform der Öffnungen 58, 60 und der Öffnung 66 liegen auf der Zylinderachse des Anschlussteils 10. Eine Breite B der Öffnungen 58, 60 beträgt etwa 1,5 mm und beträgt damit deutlich weniger als ein Zehntel des Durchmessers D des Anschlussteils 10. Ein Außendurchmesser der äußeren Öffnung 60 beträgt 40 mm und ein Außendurchmesser der kleineren Öffnung 58 beträgt 25 mm. Die Innendurchmesser der ringförmigen Öffnungen 58, 60 sind um jeweils 3 mm kleiner als die Außendurchmesser.

Ein Gehäuse des Anschlussteils 10 besteht aus einem oberen Gehäuseteil 76, in dem die Öffnungen 58, 60, 66 eingebracht sind, aus einem zweiten Gehäuseteil 84, das einen Zwischenboden bildet, und aus einer Unterschale 104. Das untere Gehäuseteil 84 weist drei gleichmäßig über einen Umfang verteilte Befestigungslaschen 106 auf, die bei der Montage axial in korrespondierende Ausnehmungen am oberen Gehäuseteil 84 eingreifen und die jeweils ein Loch für eine Schraube aufweisen, mittels der die Gehäuseteile 76, 84 radial miteinander verschraubt werden. Die Unterschale 104 wird bei der Montage mit dem zweiten Gehäuseteil 84 verschraubt. An der Unterschale 104 sind zwei sich gegenüberliegende, als in Einbaulage horizontal nach außen ragende Absätze ausgebildete Befestigungsmittel 32, 34 angeformt, die jeweils ein Loch zur Aufnahme einer Schraube 108, 108' aufweisen, mittels der die Stromversorgungsvorrichtung mit der Küchenplatte 30 verschraubt werden kann. Ein axialer Abstand H zwischen einer Anlagefläche der Befestigungsmittel 32, 34 und der kreisförmigen Oberseite des Anschlussteils 10 beträgt 60 mm, so dass das Anschlussteil 10 im montierten Zustand in der Küchenplatte 30 mit einer Normdicke von 45 mm um 15 mm über die Oberfläche der Küchenplatte 30 hinausragt.

Die ringförmigen Öffnungen 58, 66, sind in der in Figur 1 dargestellten geschlossenen Konfiguration ohne aufgestecktes Küchengerät 12 von passgenauen, ebenfalls ringförmigen Abdeckelementen 36, 38 verschlossen. Die kreisförmige Öffnung 66 ist von einem passgenauen, stiftförmigen Abdeckelement 40 verschlossen. In der dargestellten, geschlossenen Konfiguration schließen die oberen Ränder der Abdeckelemente 36 - 40 bündig mit der kreisförmigen Oberfläche des Anschlussteils 10 ab. Die Abdeckelemente 36 - 40 sind Teil einer Abdeckvorrichtung 14 der Stromversorgungsvorrichtung und sind jeweils unabhängig voneinander gegen eine Federkraft in axialer Richtung nach unten bzw. in Richtung der Küchenplatte 30 auslenkbar.

Die Öffnungen 58, 60, 66 weiten sich in axialer Richtung nach innen auf, so dass jeweils eine Hinterschneidung 56 - 56'" entsteht, die nur durch schmale, axial verlaufende Führungsrippen 110, 112 unterbrochen wird. Die Innenseiten der Führungsrippen 110, 112 bilden Führungsflächen 52, 54 zum Führen der Abdeckelemente 36, 38 in der axialen Richtung. Dadurch kann ein Verkleben des Gehäuseteils 76 mit den Abdeckelementen 36 - 40 sicher vermieden werden.

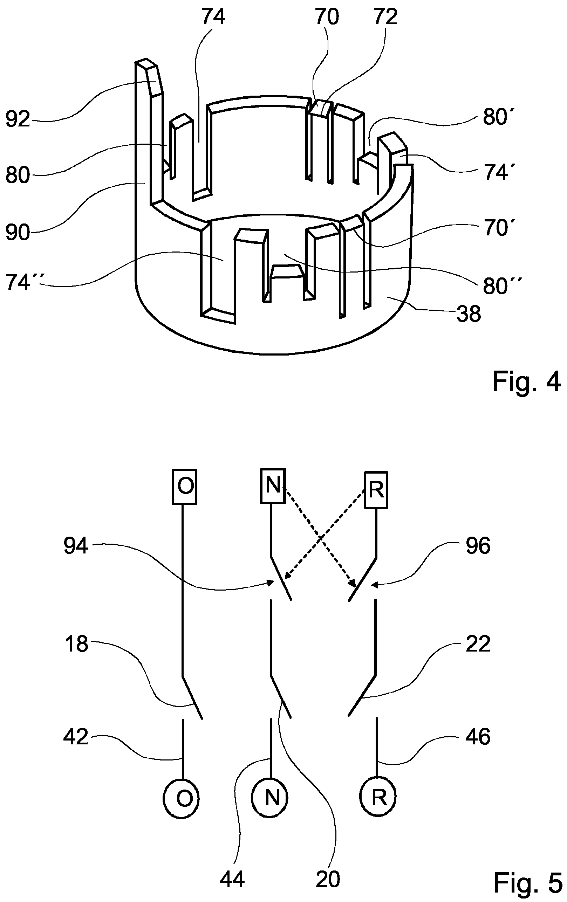

Die Abdeckelemente 36, 38 sind im Großen und Ganzen zylindermantelförmig ausgebildet und weisen an einem unteren, den Öffnungen 58, 60 abgewandten Rand mehrere schlitzförmige Ausnehmungen auf, die sich jeweils axial erstrecken (Figur 4). Ein erster Typ von Ausnehmungen trennt drei an einem Ende an das entsprechende Abdeckelement 36, 38 angeformte Rastzungen 70, 70' von einem Mantel des Abdeckelements 36, 38, so dass sich die Rastzungen 70, 70' relativ zum Mantel in radialer Richtung auslenken lassen. An einem freien Ende weist jede der Rastzungen 70, 70' eine Rastnase 72 auf. Die Rastnasen 72 des in Figur 1 dargestellten, größeren Abdeckelements 38 weisen radial nach innen, während die hier nicht dargestellten Rastnasen des kleineren Abdeckelements 36 radial nach außen weisen. Die Rastzungen 70, 70' sind in jeweils um 120° verschiedenen Lagen an das Abdeckelement 38 angeformt.

Drei weitere Ausnehmungen 74 - 74" sind ebenfalls mit Abständen von 120° über den Umfang des Abdeckelements 38 verteilt und dienen zum Führen des Abdeckelements 38 in axialer Richtung beim Auslenken aus der geschlossenen Konfiguration und zum Fixieren einer Drehlage des Abdeckelements 38 relativ zu einem Gehäuseteil 76 des Anschlussteils 10, in dem auch die Öffnungen 58, 60, 66 angeordnet sind. Das Gehäuseteil 76 weist drei sich in radialer Richtung erstreckende und im Abstand von 120° angeordnete Rippen 78, 78' auf, die im zusammengebauten Zustand der Stromversorgungsvorrichtung in die Ausnehmungen 74 - 74" eingreifen. Eine Breite der Rippen 78, 78' ist bis auf ein Montagespiel gleich der Breite der Ausnehmungen 74 - 74" und beträgt etwa 3 mm.

Drei weitere Ausnehmungen 80 - 80" sind ebenfalls mit Abständen von 120° über den Umfang des Abdeckelements 38 verteilt und dienen zum Halten von jeweils einer Spiralfeder 82, die sich an einem zweiten Gehäuseteil 84 in axialer Richtung abstützt. Um ein Abrutschen der Spiralfeder 82 zu verhindern, sind am Grund der Ausnehmungen 80 - 80" und am Gehäuseteil 84 jeweils Zentrierelemente angeordnet, die von beiden Seiten in die Spiralfeder 82 eingreifen.

Das Abdeckelement 36 weist Ausnehmungen und Rastzungen auf, die zu den Ausnehmungen 74 - 74", 80 - 80" und Rastzungen 70, 70' des dargestellten Abdeckelements 38 analog sind.

In der geschlossenen Konfiguration belasten die Spiralfedern 82 die Abdeckelemente 36, 38 in axialer Richtung nach oben. Dabei kommen die Rastnasen 72, 72' an korrespondierenden, an das Gehäuseteil 76 bzw. an die Führungsrippen 110, 112 angeformten Rastnasen zur Anlage und stützen so die Federkraft der Spiralfedern 82 an dem Gehäuseteil 76 ab. Zur Montage werden die Abdeckelemente 36, 38 axial von oben in die Öffnungen 58, 60 eingeschoben. Kommen die Rastnasen 72, 72' mit den korrespondierenden Rastnasen in Kontakt, so deformieren sich die Rastzungen 70 - 70" radial nach innen, bis die Rastnasen 72, 72' einrasten und eine Rastverbindung zwischen den Abdeckelementen 36, 38 und dem Gehäuseteil 76 hergestellt ist.

Das stiftförmige Abdeckelement 40 ist ebenfalls durch eine Spiralfeder 82' belastet und lässt sich gegen die Federkraft der Spiralfeder 82' nach unten verschieben. Zum Abstützen der Spiralfeder 82' und als Anschlag nach oben ist an das stiftförmige Abdeckelement 40 ein Kragen 86 angeformt.

Wird eine in axialer Richtung in Einbaulage nach unten gerichtete Kraft auf das Abdeckelement 36 ausgeübt, so wird dieses entgegen der Federkraft der Spiralfedern 82 in das Innere des Gehäuseteils 76 verschoben, bis der Grund der Ausnehmungen 74 - 74" an den Rippen 78 - 78" anstößt. Analoges gilt für das Abdeckelement 38.

Die Abdeckelemente 36, 38 weisen jeweils eine sich in axialer Richtung durch Öffnungen im Gehäuseteil 84 in einen unteren Bereich der Stromversorgungsvorrichtung hinein erstreckende Schaltzunge 88, 90 auf, deren freies Ende eine in Umfangsrichtung schräg verlaufende, um etwa 45° geneigte Fläche 92, 102 aufweist. Im unteren Bereich sind am Gehäuseteil 84 zwei als Mikroschalter 94, 96 ausgebildete Schaltelemente angeordnet, die jeweils ein Gehäuse 118, 120, zwei Kontakte und einen im eingebauten Zustand in Umfangsrichtung verschiebbaren Schaltknopf 98, 100 aufweisen. Die Schaltzungen 88, 90 liegen mit den geneigten Flächen 92, 102 an den Schaltknöpfen 98, 100 an, so dass die federbelasteten Schaltknöpfe 98, 100 in Einbaulage horizontal in das Gehäuse 118, 120 des jeweiligen Mikroschalters 94, 96 hinein verschoben werden und dort eine leitende Verbindung zwischen den Kontakten der Mikroschalter 94, 96 herstellen. Die Mikroschalter 94, 96 bilden zusammen eine Schaltvorrichtung 114.

In das Gehäuseteil 84 sind zudem drei bandförmige Kontaktelemente 18 - 22 eingegossen, die in der geschlossenen Konfiguration in radialer Richtung mit einem Schleifer jeweils an den Seitenflächen der Abdeckelemente 36 - 40 abgestützt sind und die bei geöffneter Abdeckvorrichtung 14 durch ihre Federkraft in die jeweilige Öffnung 58, 60, 66 hineingedrängt sind.

Die freien Enden der Kontaktelemente 18 - 22 weisen einen Abstand 48 von 8 mm zu der kreisförmigen Oberfläche des Gehäuseteils 76 bzw. des Anschlussteils 10 auf.

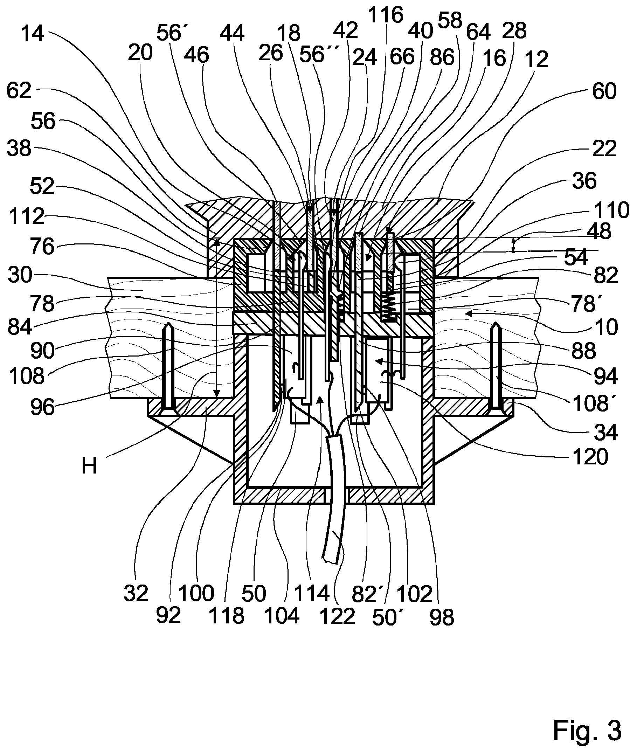

Das in Figur 2 in einem Ausschnitt dargestellte Küchengerät 12 weist ein Steckelement 16 zum Eingehen einer Steckverbindung mit dem Anschlussteil 10 auf, dessen wesentliche Bestandteile zwei ringförmige, konzentrische Kontaktelemente 44, 46 mit zylindermantelförmigen Innen- und Außenflächen und ein stiftförmiges Kontaktelement 42 mit rundem Querschnitt sind. Die Abmessungen der Kontaktelemente 42 - 46 entsprechen den Abmessungen der Öffnungen 58, 60, 66, so dass die Kontaktelemente 42 - 46 zum Aufstecken des Küchengeräts 12 auf das Anschlussteil 10 in die Öffnungen 58, 60, 66 eingreifen und so dass während einer Aufsteckbewegung die Abdeckelemente 36 - 40 in axialer Richtung in das Innere des Anschlussteils 10 verschoben werden. Dabei kommen nach einem Verschiebeweg von 8 mm die Kontaktelemente 18 - 22 an die Kontaktelemente 42 - 46 zur Anlage und schließen drei, die Küchenplatte 30 durchgreifende Leiterbahnen 24 - 28, die von den Kontaktelementen 18 - 22 und den Kontaktelementen 42 - 46 gebildet sind (Figur 3).

Das Küchengerät 12 weist einen kreisförmigen Sockelbereich 62 auf, mit dem es in einem auf das Anschlussteil 10 aufgesteckten Zustand unmittelbar auf der Küchenplatte 30 abgestützt ist, so dass die Küchenplatte 30 und nicht das Anschlussteil 10 einen Hauptteil eines Gewichts des Küchengeräts 12 trägt. Der Sockelbereich 62 überdeckt dann das Anschlussteil 10. Die Küchenplatte 30 übernimmt daher die Funktion eines Sockels für das Küchengerät 12. Der Sockelbereich 62 des Küchengeräts 12 ist unmittelbar an einem Gehäuse 64 des Küchengeräts 12 befestigt.

Im eingebauten Zustand ist das Kontaktelement 22 über den Mikroschalter 94 mit einem Minuspol des Haushaltsstromnetzes verbunden, das Kontaktelement 20 ist über den geschalteten Mikroschalter 96 mit einem Pluspol des Haushaltstromnetzes verbunden, und das Kontaktelement 18 ist unmittelbar mit einem Nullleiter des Haushaltsstromnetzes verbunden (Figur 4). Das Kontaktelement 18 schließt daher einen Schutzleiterkontakt 116, und zwar bei einem Aufsteckvorgang des Küchengeräts 12 vorauseilend, d. h. vor den Kontaktelementen 20, 22, und bei einem Abziehen des Küchengeräts 12 nacheilend. Der Fachmann kann nach Belieben einen Potentiometer und/oder ein Schaltelement 124 zwischen die Stromversorgungsvorrichtung und einen Hauptteil des Haushaltsstromnetzes schalten.

Durch die Verschaltung der Mikroschalter 94, 96 gelangt nur dann eine Spannung auf das Kontaktelement 20, wenn das das Kontaktelement 22 bedeckende Abdeckelement 36 ausgelenkt ist, und das Kontaktelement 22 wird nur dann mit dem Haushaltsstromnetz verbunden, wenn das das Kontaktelement 20 bedeckende Abdeckelement 38 ausgelenkt ist. Ein das Küchengerät 12 umfassender Stromkreis wird nur dann geschlossen, wenn beide Abdeckelemente 36, 38 gleichzeitig und weit genug aus ihrer geschlossenen Konfiguration ausgelenkt sind. Die mechanische Verbindung durch die Schaltzungen 88, 90 ist in Figur 4 durch gestrichelte Pfeile dargestellt. Über das Abdeckelement 38 kann daher das von dem Abdeckelement 36 bedeckte Kontaktelement 20 beschaltet werden, und über das Abdeckelement 36 kann das von dem Abdeckelement 38 bedeckte Kontaktelement 22 beschaltet werden.

Das Schließen der Mikroschalter 94, 96 erfolgt beim Aufstecken des Küchengeräts 12 erst nach einem Verschiebeweg der Abdeckelemente 36 - 40, der länger ist als ein Verschiebeweg, bei dem sich die Kontaktelemente 18 - 22 des Küchengeräts 12 und die Kontaktelemente 42 - 46 des Anschlussteils 10 berühren. Dadurch kann eine Gasentladung zwischen dem Küchengerät 12 und dem Anschlussteil 10 beim Aufstecken oder Abziehen des Küchengeräts 12 vermieden werden. Beim Abziehen des Küchengeräts 12 werden die Kontaktelemente 42 - 46 analog zunächst vom Haushaltsstromnetz und dann erst von den Kontaktelementen 18 - 22 des Küchengeräts 12 getrennt.

In dem unteren Gehäuseteil 76 ist ein röhrenförmiges Drainagemittel 50 eingeformt, das in die Stromversorgungsvorrichtung hineintropfende Flüssigkeit an den Mikroschaltern 94, 96 vorbeileitet. In einer Unterschale 104 der Stromversorgungsvorrichtung ist ein Loch zum Durchführen eines mit dem Hausstromnetz verbundenen Verbindungskabels 122 angeordnet. Das Loch ist groß genug, um ein Abtropfen der Flüssigkeit zu erlauben.

Figur 5 zeigt das Anschlussteil 10 in einem eingebauten Zustand in einer Schrägansicht. Neben dem Anschlussteil 10 ist ein Schaltelement 124 angeordnet, durch das ein Bediener die Stromversorgungsvorrichtung aktivieren und deaktivieren kann. Ferner kann der Bediener eine an den Kontaktelementen 20, 22 anliegende Spannung bestimmen.

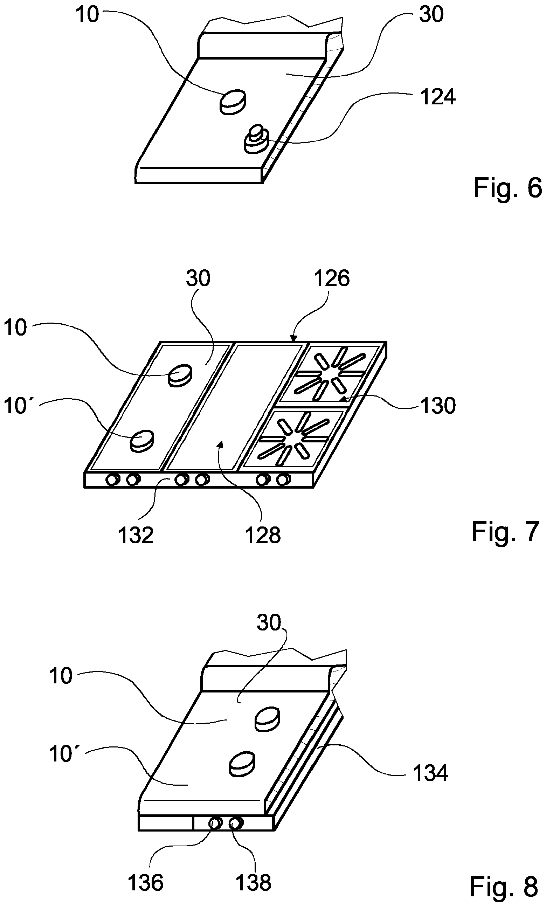

Die Figuren 7 und 8 zeigen verschiedene eingebaute Stromversorgungsvorrichtungen der in den Figuren 1 - 5 dargestellten Art. Analoge Merkmale sind mit gleichen Bezugszeichen versehen. Zur Beschreibung der Anschlussteile 10, 10' wird auf die Beschreibung zu den Figuren 1 - 6 verwiesen.

Figur 7 zeigt ein modular aufgebautes Kochfeld 126 mit einem ersten Modul, das eine Küchenplatte 30 mit zwei integrierten Anschlussteilen 10, 10' umfasst. Ferner umfasst das Kochfeld 126 eine Glaskeramikkochmulde 128 und eine zweiflammige Gaskochmulde 130. Über ein gemeinsames Bedienfeld 132 können sowohl die Anschlussteile 10, 10' als auch die Glaskeramikkochmulde 128 und die Gaskochmulde 130 betätigt werden.

Figur 8 zeigt ein Einbaugerät mit zwei Anschlussteilen 10, 10' und mit einem Steuergerät 134 mit zwei Schaltknöpfen 136, 138, die jeweils einem der Anschlussteile 10, 10' zugeordnet sind.

**Bezugszeichen**

| | | | |
|---|---|---|---|
| 10 | Anschlussteil | 62 | Sockelbereich |
| 12 | Küchengerät | 64 | Gehäuse |
| 14 | Abdeckvorrichtung | 66 | Öffnung |
| 16 | Steckelement | 70 | Rastzunge |
| 18 | Kontaktelement | 72 | Rastnase |
| 20 | Kontaktelement | 74 | Ausnehmung |
| 22 | Kontaktelement | 76 | Gehäuseteil |
| 24 | Leiterbahn | 78 | Rippe |
| 26 | Leiterbahn | 80 | Ausnehmung |
| 28 | Leiterbahn | 82 | Spiralfeder |
| 30 | Küchenplatte | 84 | Gehäuseteil |
| 32 | Befestigungsmittel | 86 | Kragen |
| 34 | Befestigungsmittel | 88 | Schaltzunge |
| 36 | Abdeckelement | 90 | Schaltzunge |
| 38 | Abdeckelement | 92 | Fläche |
| 40 | Abdeckelement | 94 | Mikroschalter |
| 42 | Kontaktelement | 96 | Mikroschalter |
| 44 | Kontaktelement | 98 | Schaltknopf |
| 46 | Kontaktelement | 100 | Schaltknopf |
| 48 | Abstand | 102 | Fläche |
| 50 | Drainagemittel | 104 | Unterschale |
| 52 | Führungsfläche | 106 | Befestigungslasche |
| 54 | Führungsfläche | 108 | Schraube |
| 56 | Hinterschneidung | 110 | Führungsrippe |
| 58 | Öffnung | 112 | Führungsrippe |
| 60 | Öffnung | 114 | Schaltvorrichtung |
| 116 | Schutzleiterkontakt | 132 | Bedienfeld |
| 118 | Gehäuse | 134 | Steuergerät |
| 120 | Gehäuse | 136 | Schaltknopf |
| 122 | Verbindungskabel | 138 | Schaltknopf |
| 124 | Schaltelement | B | Breite |
| 126 | Kochfeld | D | Durchmesser |
| 128 | Glaskeramikkochmulde | H | Abstand |
| 130 | Gaskochmulde | | |

## Patentansprüche

1. Stromversorgungsvorrichtung mit einem Anschlussteil (10) zum Aufstecken eines Küchengeräts (12) mit einem Kontaktelement (18 - 22) zum Kontaktieren des Küchengeräts (12) und mit einer Schaltvorrichtung (114) zum Verbinden des Kontaktelements (18 - 22) mit einem Stromnetz, wobei die Schaltvorrichtung (114) zumindest zwei unabhängig voneinander betätigbare Schaltelemente (94, 96) umfasst **dadurch gekennzeichnet, dass** wenigstens eines der Schaltelemente (94, 96) ein Gehäuse (118, 120) mit einem in Einbaulage horizontal verschiebbaren Schaltknopf (98, 100) umfasst.

2. Stromversorgungsvorrichtung nach Anspruch 1, **gekennzeichnet durch** wenigstens eine federbelastete Abdeckvorrichtung (14), die dazu vorgesehen ist, von einem korrespondierenden Steckelement (16) des Küchengeräts (12) aus einer Abdeckstellung in eine offene Stellung ausgelenkt zu sein.

3. Stromversorgungsvorrichtung nach Anspruch 2, **dadurch gekennzeichnet, dass** die Abdeckvorrichtung (14) zumindest zwei unabhängig voneinander auslenkbare, federbelastete Abdeckelemente (36 - 40) zum Schalten jeweils eines Schaltelements (94, 96) umfasst.

4. Stromversorgungsvorrichtung nach Anspruch 3, **dadurch gekennzeichnet, dass** wenigstens ein erstes Abdeckelement (38, 40) zum Beschalten eines Kontaktelements (20, 22) vorgesehen ist, das von einem zweiten Abdeckelement (40, 38) bedeckt ist.

5. Stromversorgungsvorrichtung nach einem der Ansprüche 3 und 4, **dadurch gekennzeichnet, dass** beide Abdeckelemente (38, 40) zum Beschalten des von dem jeweils anderen Abdeckelement (38, 40) bedeckten Kontaktelements (20, 22) vorgesehen sind.

6. Stromversorgungsvorrichtung nach einem der vorhergehenden Ansprüche, **dadurch gekennzeichnet, dass** die Schaltelemente (94, 96) zu einer logischen UND-Schaltung verknüpft sind.

7. Stromversorgungsvorrichtung nach einem der vorhergehenden Ansprüche, **dadurch gekennzeichnet, dass** wenigstens ein Schaltelement (94, 96) nur bei geschlossenem Kontakt des Kontaktelements (18, 20) mit einem korrespondierenden Kontaktelement (42, 46) des Steckelements (16) betätigbar ist.

8. Stromversorgungsvorrichtung nach einem der vorhergehenden Ansprüche, **dadurch gekennzeichnet, dass** zumindest ein Schaltelement (94, 96) nur bei geschlossenem Schutzleiterkontakt (116) betätigbar ist.

9. Stromversorgungsvorrichtung nach einem der vorhergehenden Ansprüche, **gekennzeichnet durch** ein Drainagemittel (50) zum Trockenlegen der Schaltvorrichtung (114).

## Claims

1. Power supply device with a connecting part (10) for plugging in a kitchen appliance (12) with a contact element (18 - 22) for contacting the kitchen appliance (12) and with a switching device (114) for connecting the contact element (18 - 22) to a power network, wherein the switching device (114) comprises at least two switching elements (94, 96) which can be actuated independently of one another, **characterised in that** at least one of the switching elements (94, 96) comprises a housing (118, 120) with a switch button (98, 100) which can be displaced horizontally in an installation position.

2. Power supply device according to claim 1, **characterised by** at least one spring-loaded covering device (14), which is provided to be deflected by a corresponding plug element (16) of the kitchen appliance (12) from a covering position into an open position.

3. Power supply device according to claim 2, **characterised in that** the covering device (14) comprises at least two spring-loaded covering elements (36 - 40) which can be deflected independently of one another for switching a switching element (95, 96) in each case.

4. Power supply device according to claim 3, **characterised in that** at least one first covering element (38, 40) is provided for connecting a contact element (20, 22), which is covered by a second covering element (40, 38).

5. Power supply device according to one of claims 3 and 4, **characterised in that** both covering elements (38, 40) are provided for connecting the contact element (20, 22) covered by the other covering element (38, 40) in each case.

6. Power supply device according to one of the preceding claims, **characterised in that** the switching elements (94, 96) are linked to a logical UND circuit.

7. Power supply device according to one of the preceding claims, **characterised in that** at least one switching element (94, 96) can only be actuated with a closed contact of the contact element (18, 20) with a corresponding contact element (42, 46) of the plug element (16).

8. Power supply device according to one of the preceding claims, **characterised in that** at least one switching element (94, 96) can only be actuated with a closed earth wire contact (116).

9. Power supply device according to one of the preceding claims, **characterised by** a drainage means (50) for draining the switching device (114).

## Revendications

1. Dispositif d'alimentation électrique avec une pièce de raccordement (10) destinée au branchement d'un appareil culinaire (12) avec un élément de contact (18-22) destiné à entrer en contact avec l'appareil culinaire (12) et avec un dispositif de commutation (114) destiné à la connexion de l'élément de contact (18-22) à un réseau électrique, dans lequel le dispositif de commutation (114) comprend au moins deux éléments de commutation (94, 96) actionnables indépendamment l'un par rapport à l'autre, **caractérisé en ce qu**'au moins l'un des éléments de commutation (94, 96) comprend un boîtier (118, 120) avec un bouton de commutation (98, 100) déplaçable horizontalement dans la position de montage.

2. Dispositif d'alimentation électrique selon la revendication 1, **caractérisé par** au moins un dispositif de recouvrement (14) commandé par ressort qui est prévu pour être déplacé d'une position de recouvrement dans une position ouverte par un élément enfichable (16) correspondant de l'appareil culinaire (12).

3. Dispositif d'alimentation électrique selon la revendication 2, **caractérisé en ce que** le dispositif de recouvrement (14) comprend au moins deux éléments de recouvrement commandés par ressort déplaçables indépendamment l'un par rapport à l'autre (36-40) pour la commutation respectivement d'un élément de commutation (94, 96).

4. Dispositif d'alimentation électrique selon la revendication 3, **caractérisé en ce qu**'au moins un premier élément de recouvrement (38, 40) est prévu pour le câblage d'un élément de contact (20, 22), qui est recouvert par un deuxième élément de recouvrement (40, 38).

5. Dispositif d'alimentation électrique selon l'une des revendications 3 et 4, **caractérisé en ce que** les deux éléments de recouvrement (38, 40) sont prévus pour le câblage de l'élément de contact (20, 22) recouvert par respectivement l'autre élément de recouvrement (38, 40).

6. Dispositif d'alimentation électrique selon l'une des revendications précédentes, **caractérisé en ce que** les éléments de commutation (94, 96) sont reliés à un circuit ET logique.

7. Dispositif d'alimentation électrique selon l'une des revendications précédentes, **caractérisé en ce qu'**au moins un élément de commutation (94, 96) n'est actionnable avec un élément de contact (42, 46) correspondant de l'élément enfichable (16) que lorsque le contact de l'élément de contact (18, 20) est fermé.

8. Dispositif d'alimentation électrique selon l'une des revendications précédentes, **caractérisé en ce qu**'au moins un élément de commutation (94, 96) n'est actionnable que lorsque le contact de conducteur de protection (116) est fermé.

9. Dispositif d'alimentation électrique selon l'une des revendications précédentes, **caractérisé par** un moyen de drainage (50) destiné à l'assèchement du dispositif de commutation (114).
